Europäisches Patentamt

European Patent Office

Office européen des brevets

(19)

(11) Publication number: **0 248 530**

**A2**

# EUROPEAN PATENT APPLICATION

(12)

(21) Application number: **87303948.1**

(22) Date of filing: **01.05.87**

(51) Int. Cl.⁴: **G01B 17/00**

A request for addition of text to line 31 of page 5 of the description has been filed pursuant to Rule 88 EPC. A decision on the request will be taken during the proceedings before the Examining Division (Guidelines for Examination in the EPO, A-V, 2.2).

(30) Priority: **09.05.86 NZ 216026**

(43) Date of publication of application:
**09.12.87 Bulletin 87/50**

(84) Designated Contracting States:
**DE FR GB IT**

(71) Applicant: **Kay, Leslie**
**82 Scarborough Road**
**Christchurch 8(NZ)**

(72) Inventor: **Kay, Leslie**
**82 Scarborough Road**
**Christchurch 8(NZ)**

(74) Representative: **Symes, Robert George et al**
**FORRESTER & BOEHMERT**
**Widenmayerstrasse 4/I**
**D-8000 München 22(DE)**

(54) **A method and apparatus for inspection or monitoring of a product.**

(57) A method for inspecting or monitoring a product by determining the distance (D), in a selected direction, between selected surfaces (A, B) of two parts of the product, which distance (D) has a given value when the two parts are in a correct positional relation by the steps of producing airborne stress wave energy radiation, varying the frequency of the radiation between end values, and transmitting the radiation of varying frequency toward the surfaces at least approximately in the selected direction; receiving the transmitted radiation, after reflection from the surfaces, at a receiving location; and deriving an indication of the instantaneous difference ($\Delta f$) in frequency, at the receiving location, between the radiation reflected from the selected surface (A) of one of the parts and the radiation reflected from the selected surface (B) of the other one of the parts.

FIG 3

## A method and apparatus for inspection or monitoring of a product

The present invention relates to a method and apparatus for the inspection or monitoring of the configuration of a product and, in particular, remote monitoring of the distance between at least two identifiable features of a product during the course of its fabrication.

During the fabrication of a product, particularly one composed of a number of parts, it is frequently necessary, or at least desirable, to monitor the fabrication process or test the finished product to determine whether its component parts have been correctly assembled. Frequently, this requires a determination of the distance separating two identificable features, e.g. surfaces or other identifiable reference features.

To carry out such a measurement automatically, it is known to either give the object a known orientation or to perform a number of measurements as the object is rotated about a defined axis, whereupon the resulting measured values are correlated with the required values.

Products which are constructed by assembling a number of component parts, for example by robot devices, progressively acquire the desired final shape as the parts are assembled. Correct assembly can be determined by measuring the distance of two identifiable features of the product from a selected reference point, one of the features existing on the product before a selected component is assembled thereto, and the other feature being part of the selected component. Only if the component has been assembled correctly onto the product will the two distance measurements be correct. The results of the two distance measurements can then be compared to determine whether the selected component has been correctly assembled to the product undergoing fabrication.

It is an object of the present invention to provide a direct indication of the distance between two features of a product without requiring an intermediate determination of the distance between each feature and a selected reference location.

Another object of the invention is to accurately monitor relatively small distances, of the order of a fraction of a centimeter to several centimeters, at a measuring location spaced several centimeters from the product, using a simple signal processing system.

A further object of the invention is to extend the basic procedure to permit direct identification of the distances between three or more features of an object.

The above and other objects are achieved, according to the invention, by a method for inspecting or monitoring a product characterised by determining the distance, in a selected direction, between selected surfaces of two parts of the product, which distance has a given value when the two parts are in a correct positional relation, comprising producing airborne stress wave energy radiation, varying the frequency of the radiation between end values, and transmitting the radiation of varying frequency toward the surfaces at least approximately in the selected direction; receiving the transmitted radiation, after reflection from the surfaces, at a receiving location; and deriving an indication of the instantaneous difference in frequency, at the receiving location, between the radiation reflected from the selected surface of one of the parts and the radiation reflected from the selected surface of the other one of the parts.

Further according to the invention, there is provided apparatus for inspecting or monitoring a product presenting, when in correct form, a given distance between at least two selected surfaces comprising transmitting means for generating and radiating airborne stress wave energy, means for frequency modulating said energy in a mode to give rise to a frequency difference between the radiation received at a receiving station after reflection from the selected surfaces respectively, receiving means at the receiving station characterised in that it includes deriving means for deriving from the received radiation a signal having a frequency determined by said frequency difference and representative of said given distance.

The invention will now be described in more detail with reference to the accompanying drawing wherein:-

FIGURE 1 is an elevational view illustrating irradiation of a product according to the invention;

FIGURES 2a and 2b are diagrams illustrating the frequency relations of signals employed to effect distance measurements according to the invention;

FIGURE 3 is a block diagram of apparatus for carrying out the invention;

FIGURE 4 is a spectrum diagram of an information signal produced in the apparatus of Figure 3;

FIGURE 5 is a diagram illustrating the passband characteristics of filters forming part of the apparatus of Figure 3.

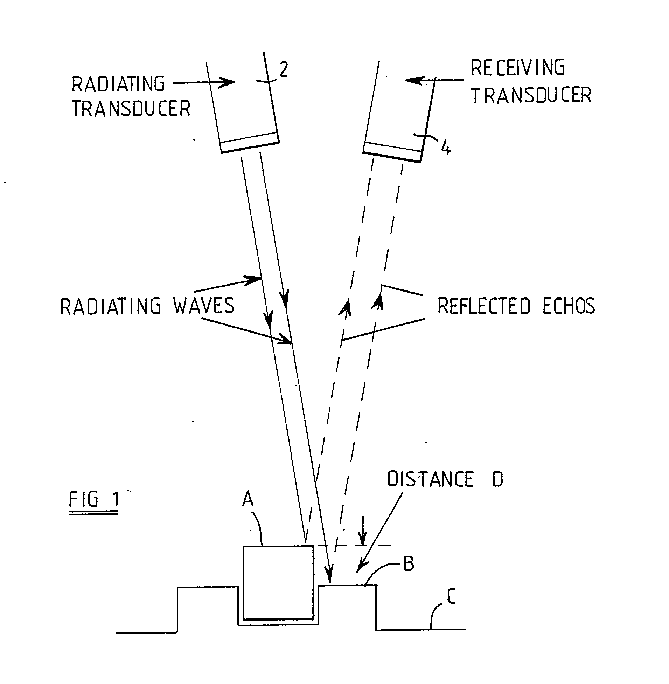

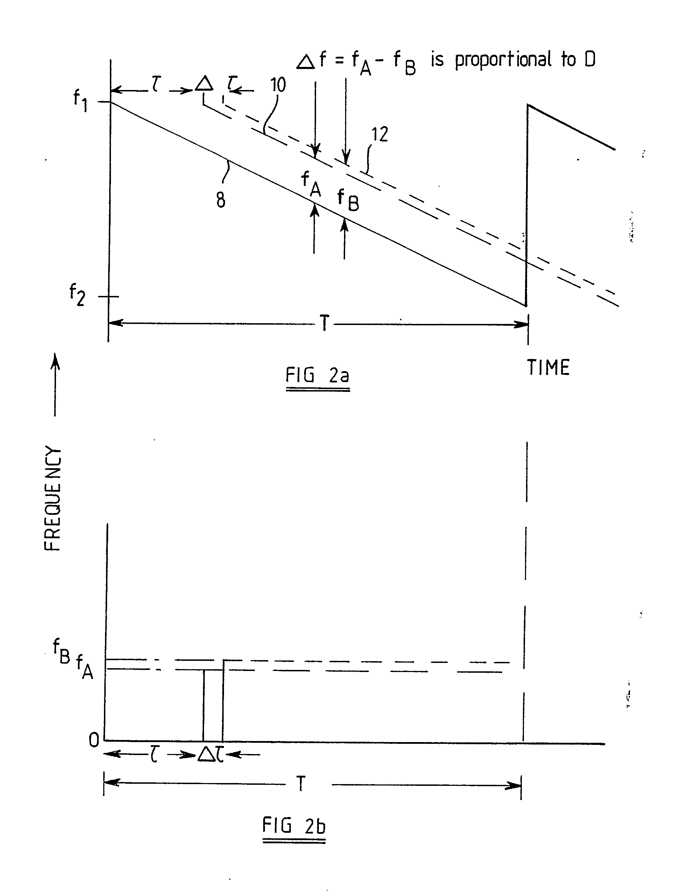

Figure 1 illustrates the observation, or scanning, of an object to permit determination of the distance D between a surface A of a first part and a surface B of a second part after the first part has been installed in the second part. The scanning system includes a radiating transducer 2 arranged to direct airborne stress wave energy so that it will intercept surfaces A and B, and a receiving transducer 4 which is oriented to receive energy reflected from those surface. Preferably, the radiated energy has a frequency in the ultrasonic range.

In order to achieve effective utilisation of the radiated energy and to eliminate echoes from other surfaces, the radiation emitted by transducer 2 should be made highly directive, as should the receiving pattern of transducer 4.

Preferably, transducers 2 and 4 are disposed so that the axes of their radiation patterns extend approximately parallel to the direction of the distance D to be measured. However, this is not absolutely necessary because the value of distance D can, in any event, be calculated on the basis of the geometric relation between the directions of the radiation pattern axes and the direction of distance D. It is preferred, however, that the reflecting surfaces whose separation is to be determined be substantially perpendicular to distance D and that the directions of the transducer radiation pattern axes be such that a substantial part of surface B not be masked by surface A.

The travel time of radiation from transducer 2 to the object being monitored and back to transducer 4 depends, of course, on the distance between each transducer, on the one hand, and the object, on the other hand, and the total travel time of radiation reflected from surface A will differ from that reflected from surface B as a function of the magnitude of distance D.

In order to utilise this difference in travel time, the frequency of the radiation emitted by transducer 2 is varied during a measuring period having a duration preferably at least two, multiples of the total radiation travel time. This is depicted in Figure 2a in which sawtooth wave 8 represents the frequency of the emitted radiation over a measuring period T, during which the radiation frequency is varied between a maximum value $f_1$ and a minimum value $f_2$. In the example illustrated in Figure 2a, the emitted radiation frequency is varied at a constant rate. However, other forms of variation can be employed, the only requisite being that the frequency variation be monotonic over the measuring period.

The reflected radiation received by transducer 4 is a time-shifted version of the radiation emitted by transducer 2 so that from the beginning of a frequency sweep period T for the emitted radiation, the radiation component reflected from surface A will be received with a delay and the radiation component reflected from surface B will be received with a delay $\tau + \Delta\tau$. Preferably, the sweep period T is selected, in dependence on the distance D and the distance between the transducers and the object, so that $T >> \tau + \Delta\tau$ so that useful information will be obtained during a substantial portion of the period T. Over the time period T-$\tau$, the radiation component reflected from surface A will have the frequency variation represented by the waveform 10 and over the time period T - $(\tau + \Delta\tau)$ the radiation component reflected from surface B will have the waveform 12. At any given point in time over the latter period, the radiation components reflected from surface A and B and received at transducer 4 will differ in frequency from one another by a magnitude $f = f_B - f_A$. and this frequency difference will be proportional to the magnitude of distance D. Moreover, the value of f will be independent of the distance between the transducers and the surfaces being monitored.

A monitoring operation can be performed by placing an object to be measured at a location where surfaces A and B will be illuminated by the measuring radiation for a time sufficient to permit the required information to be derived from the received radiation. Alternatively, in a production line, where successive objects are moving along a path, transducer 2 can be controlled by a switch responsive to movement of an object through the measuring location so that transducer 2 will produce radiation and the reflected radiation received by transducer 4 will be processed, only while the object is in a position where surfaces A and B are being illuminated by the emitted radiation.

In addition, the output of transducer 4 can be blocked during an interval selected to correspond at least approximately to $(\tau + \Delta\tau)$ from the start of each sweep period T to minimise the presence of received frequency components which differ from $f_A$ and $f_B$ and which will occur during that interval, as indicated by the right hand portion of Figure 2a.

In order to subsequently process the radiation received by transducer 4, a signal corresponding to the radiation received by transducer 4 can be mixed with a signal representative of the radiation being emitted in time coincidence by the transducer 2, to thereby produce a signal having substantially constant frequency components $f_B$ and $f_A$, as shown in Figure 2b.

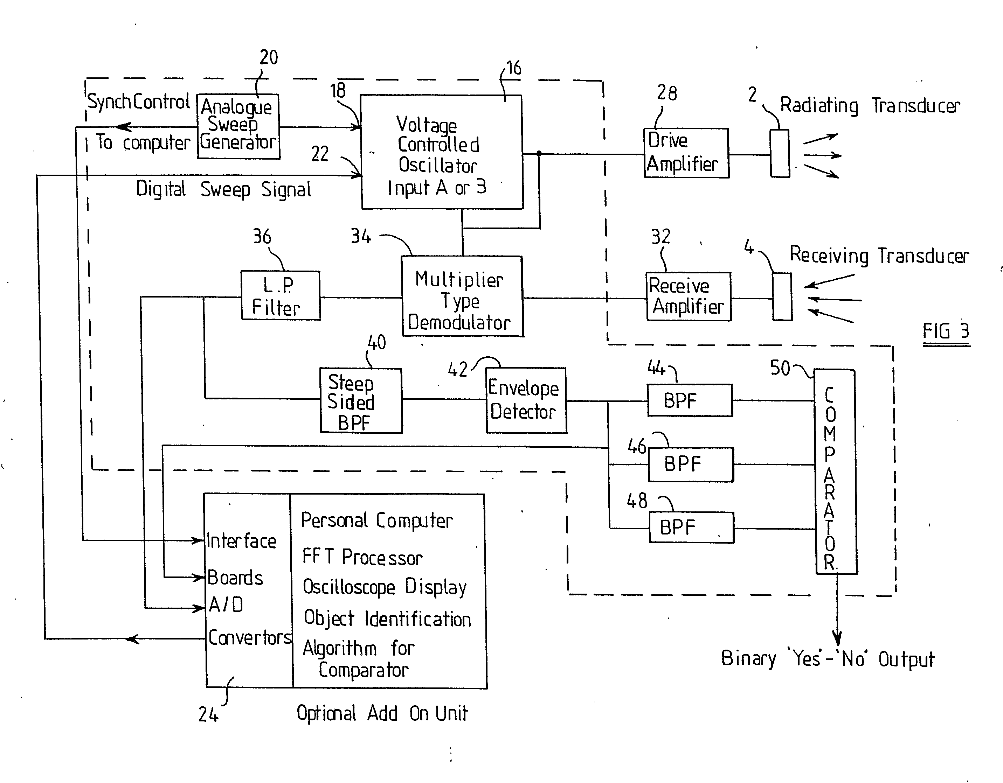

Figure 3 illustrates one suitable embodiment of a circuit for generating radiation signals and processing the received radiation. A voltage controlled oscillator 16 has an analog control input 18 connected to an analog voltage sweep generator 20 and a digital sweep voltage input 22 connected to receive a digital sweep signal, which may be provided by an external computer device 24. Oscillator 16 is preferably switchable to be responsive to a signal at either of its inputs. Oscillator 16 then generates an alternating output signal which varies in frequency in dependence on the sweep voltage to which it is set to respond, which sweep voltage can have the form represented by waveform 8 of Figure 2a. The output voltage from oscillator 16 is supplied to a drive amplifier 28 which is in turn connected to drive radiating transducer 2.

Airborne stress wave energy reflected from surfaces A and B is then received by receiving transducer 4, and the resulting electrical signal is amplified by a receiving amplifier 32. The output signal from amplifier 32 is supplied, together with the output signal from oscillator 16, to a multiplier type demodulator 34 which can be, for example, an XR-220B operational multiplier marketed by the R-ohm Corporation.

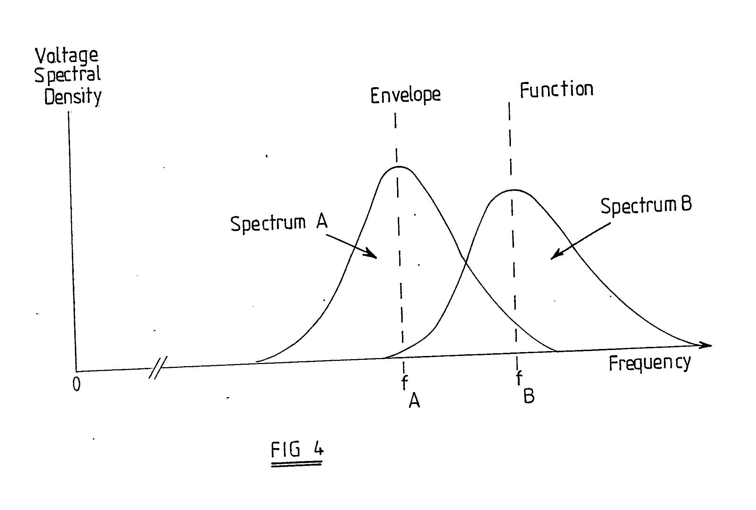

The output from the modulator 34 will have a frequency spectrum with the form shown in Figure 4.

The output signal from the modulator 34 is conducted to a low pass filter 36 having an upper cut-off frequency selected to be somewhat higher than $f_B$.

The output signal from filter 36 could be conducted to device 24, where the value of    can be determined by any conventional means involving, for example, spectrum analysis, or fast Fourier transform analysis.

However, it is preferred to obtain an indication of this frequency value by means of simpler circuitry which includes a steep sided bandpass filter 40 whose input is connected to the putput of filter 36 and whose passband encompasss frequencies $f_A$ and $f_B$. The upper and lower frequency limits of the passband provided by filter 40 can be selected in dependence on the shape and width of spectra A and B, and the frequencies of any unwanted components in the output signal from filter 36. In general, filtering is employed, after demodulation, for the purpose of removing unwanted modulation frequency components and signal components resulting from surfaces other than those whóise distance is to be determined. The result is to remove noise components at frequencies outside the band containing the desired frequencies.

Because of the presence of steep sided bandpass filter 40, the output from that filter or the output from detector 42 can be applied to an oscilloscope to enable the operation of the circuit to be observed, e.g. during initial setup or during operation. If the circuit is to produce only a machine readable output, e.g. only the output of comparator 50 is to be utilised, filter 40 could be eliminated.

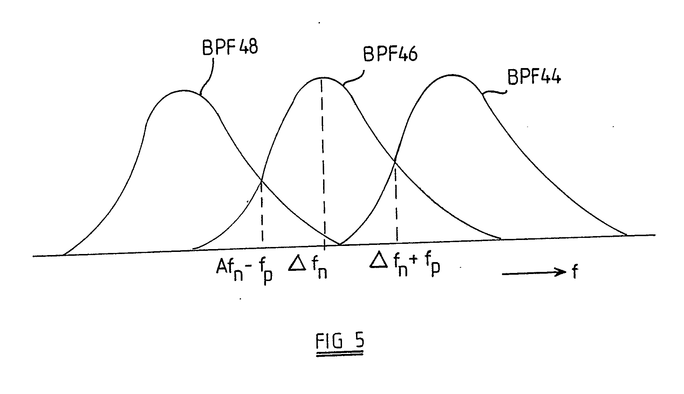

The output signal from filter 49 is then subjected to an envelope detection in device 42. This can be constituted by any known type of envelope detector and could, in its simplest form, be composed of a series diode followed by a shunt branch containing a parallel RC low pass filter. The output signal from detector 42 will have a frequency spectrum containing an envelope function whose frequency is centred at $\Delta f$. This output signal is then supplied to the inputs of three bandpass filters 44, 46 and 48 having approximately Gaussian characteristics, as shown in Figure 5. The centre of the passband of filter 46 is selected to coincide with the difference frequency $\Delta f_n$ corresponding to the desired value for distance D, while filters 44 and 48 are constructed to have passbands centred at higher and lower frequency values respectively, such that the characteristics of filter 46 at points corresponding to frequency values $\Delta f_n \pm f_p$ corresponding to the acceptable tolerance range for distance D. This means that, assuming that all of the filters have essentially identical characteristics, except for the centre frequencies thereof, the output signal from the filter 46 will be greater than that from either of the other filters 44 and 48 if distance D is within the acdeptable tolerance range, i.e.$\Delta f_n - f_p < \Delta f < \Delta f_n + f_p$.

The output signals from filters 44, 46 and 48 are conducted to a comparator 50 where the amplitude of their output signals are compared to produce a binary signal indicating whether or not distance D has an acceptable value. In order to confirm that $\Delta f$ has a value within the response range of filters 44, 46 and 48, comparator 50 could also be provided with a threshold detector connected to the output of filter 46 and indicating whether the signal being provided by filter 46 is above a certain minimum threshold value.

It would alternatively be possible to replace filter 44 with a high pass filter and filter 48 with a low pass filter each having a cut-off frequency characteristic corresponding to the associated portion of the characteristics shown in Figure 5.

The present invention could also be extended to the monitoring of distances between three or more reflecting surfaces, e.g. between surfaces A and B, B and C and A and C of Figure 1.

If the radiation emitted by transducer 2 impinges on the three surfaces A, B, C (Figure 1) the signal derived at receiving transducer 4 will contain three primary difference frequency components at frequencies:-

$$f_A - f_B = f_a$$
$$f_A - f_C = f_b$$
$$f_B - f_C = f_c$$

When this signal is processed in demodulator 34, and if filters 36 and 40 have appropriate cutoff frequencies, the output signal from envelope detector 42 will contain primary components at those three frequencies. The output signal from detector 42 can then be applied to the three bandpass filters 44, 46 and 48, but in this case the passband of each filter is centred on the value of a respective one of the frequencies $f_a$, $f_b$ and $f_c$ which corresponds to the desired value for the associated distance between the respective object surfaces. In addition, each filter 44, 46 and 48 preferably has a bandwidth less than two times the smallest desired difference frequency value.

By first monitoring an object whose associated surfaces A. B and C are known to be separated by the desired distance values, one can obtain a set of bandpass filter output signals whose amplitudes have a specified relationship. This information, together with information relating permissible deviations in this amplitude value relationship, can then be stored in comparator 50. Thereafter, each produce being assembled can be monitored and the output signals from the three bandpass filters 44, 46 and 48 associated with each such product can then be compared with the information stored in comparator 50 to produce an output signal indicating whether or not the particular product has been properly assembled.

According to another embodiment for monitoring the distance relationships among three surfaces, each bandpass filter 44, 46 and 48 can be replaced by a group of three filters, with each group of three filters having passbands which are related to one another in the manner illustrated in Figure 5 and described earlier herein. In this case, the passband of the centre filter is centred on a respective one of the above mentioned three difference frequencies. In this case, the outputs from each group of three bandpass filters will provide a direct indication of whether one of the distances being monitored is within acceptable tolerance limits.

As shown in Figure 3, the output of envelope detector 42 is additionally connected to device 24 to enable the output signal from detector 42 to be subjected to a fast Fourier transform spectral analysis which need only have a small number, e.g. 8-64, of lines covering the frequency band of the output from detector 42. Then the individual lines can be subjected to a comparator process. This procedure could be carried out in place of the operation performed by filters 44, 46 and 48 and comparator 50.

The invention now being fully described, it will be apparent to one of ordinary skill in the art that many changes and modifications can be made thereto without departing from the spirit or scope of the invention as set forth herein.

The present disclosure relates to the subject matter disclosed in New Zealand application 216026 filed on May 1st 1986 and postdated to 9th May 1986, the entire specification of which is incorporated herein by reference.

The features disclosed in the foregoing description, or the accompanying drawing, expressed in their specific forms or in terms of a means for performing the disclosed function, or a method or process for attaining the disclosed result, or a class or group of substances or compositions, as appropriate, may, separately or any combination of such features, be utilised for realising the invention in diverse forms thereof.

## Claims

1. A method for inspecting or monitoring a product characterised by determining the distance (D), in a selected direction, between selected surfaces (A, B) of two parts of the product, which distance has a given value when the two parts are in a correct positional relation, comprising producing airborne stress wave energy radiation, varying the frequency of the radiation between end values, and transmitting the radiation of varying frequency toward the surfaces at least approximately in the selected direction; receiving the transmitted radiation, after reflection from the surfaces (A, B), at a receiving location; and deriving an indication of the instantaneous difference in frequency ($\Delta f$), at the receiving location, between the radiation reflected from the selected surface (A) of one of the parts and the radiation reflected from the selected surface (B) of the other one of the parts.

2. A method according to Claim 1 further characterised in that the radiation frequency is in the ultrasonic range.

3. A method according to Claim 2 further characterised in that said step of deriving comprises mixing a first electrical signal having a frequency corresponding to the transmitted radiation of varying frequency, with a second and a third electrical signal derived from the radiation received at the receiving location and resulting respectively from reflection from the selected surfaces (A, B), to produce an output signal containing a component having a frequency representative of the distance between the selected surfaces.

4. A method according to Claim 3 characterised in that said step of deriving further comprises effecting bandpass filtering of the output signal produced by said mixing step in a first passband centred on the frequency representative of a given value of the distance between the selected surface and in two further passbands overlapping the first passband and centred on frequencies above and below respectively the frequency on which the first passband is centred, and comparing the amplitude of the signals resulting from the three bandpass filterings.

5. A method according to Claim 1 further characterised in that there are three selected surfaces presented by the product, with the distance between each set of two of the selected surfaces having a respective given value when the parts of product are in a correct positional relation, and said step of deriving comprises deriving an indication of the instantaneous difference in frequency, at the receiving location, between the radiation reflected from at least two different sets of the selected surfaces each comprising a pair of the surfaces.

6. Apparatus for inspecting or monitoring a product presenting, when in a correct form, a given distance (D) between at least two selected surfaces comprising transmitting means (2, 16) for generating and radiating airborne stress wave energy, means (21, 24) for frequency modulating said energy in a mode to give rise to a frequency difference (Δf) between the radiation received at a receiving station after reflection from the selected surfaces respectively, receiving means (4) at the receiving station characterised in that it includes deriving means (34, 36, 40, 42, 24) for deriving from the received radiation a signal having a frequency determined by said frequency difference (Δf) and representative of said given distance (D).

7. Apparatus according to Claim 1 further characterised in that the deriving means comprises mixing means for mixing a first signal derived from said transmitting means (2, 16) having the frequency of the radiated energy with a second and a third signal derived from the receiving means (4, 32) and resulting from radiation respectively reflected from the selected surfaces (A, B) to produce an output signal containing a component having a frequency(Δf) representative of said given distance (D).

8. Apparatus according to Claim 7 further characterised in that the deriving means further includes bandpass filter means (46) centred on a frequency representative of said given distance (D) and further filter means (44, 48) having passbands respectively overlapping with the passband of the first said band pass filter means (46), and means (50) responsive to output from the first said pass band filter means (46) and the further filter means (44, 48) to determine or indicate the presence of a product presenting the given distance (D)

9. Apparatus according to Claim 6 further characterised in that the deriving means (34, 36, 40, 42, 24) includes means for deriving from the received radiation a signal containing a plurality of components of respectively differing frequencies corresponding respectively to differing values of distance (D) presented by the product between a plurality of sets of surfaces (A, B) to be inspected or monitored.

FIG 1

$\triangle f = f_A - f_B$ is proportional to D

$f_1$

$\tau$  $\triangle$ $\tau$  10

12

8

$f_A$  $f_B$

$f_2$

T

TIME

FIG 2a

FREQUENCY

$f_B$  $f_A$

0

$\tau$  $\triangle \tau$

T

FIG 2b

FIG 3

Binary 'Yes'-'No' Output

0 248 530

FIG 4

FIG 5